## Europäisches Patentamt
## European Patent Office
### Office européen des brevets

(11) Veröffentlichungsnummer: **0 288 784**
**A2**

(12) **EUROPÄISCHE PATENTANMELDUNG**

(21) Anmeldenummer: **88105429.0**

(22) Anmeldetag: **06.04.88**

(51) Int. Cl.⁴: **G01L 5/04 , G01L 5/10**

(30) Priorität: **18.04.87 DE 3713290**
**09.05.87 DE 3715605**

(43) Veröffentlichungstag der Anmeldung:
**02.11.88 Patentblatt 88/44**

(84) Benannte Vertragsstaaten:
**CH DE ES FR GB IT LI**

(71) Anmelder: **BARMAG AG**
**Leverkuser Strasse 65 Postfach 11 02 40**
**D-5630 Remscheid- 11 Lennep(DE)**

(72) Erfinder: **Honigmann, Günter**
**Ringstrasse 27**
**D-5630 Remscheid-Lennep (11)(DE)**

(74) Vertreter: **Pfingsten, Dieter, Dipl.-Ing.**
**Barmag AG Leverkuser Strasse 65 Postfach**
**110240**
**D-5630 Remscheid 11(DE)**

(54) **Fadenzugkraftmessvorrichtung mit federnd bewegbarem Fadenfühler.**

(57) Zum Messen der Fadenzugkraft werden Fadenzugkraftmeßvorrichtungen verwandt mit einem Fadenfühler, der federnd bewegbar ist. Das Meßsignal wird durch Temperatur-und Lagereinflüsse verfälscht.

Zur Abhilfe ist der Fadenfühler ein starrer Stab (7), der in einer Torsionsfeder eingespannt ist. Die Torsionsfeder ist ein beidseitig eingespanntes Blech (2). Der Stab ragt zweiseitig aus dem Blech heraus und besitzt an seiner einen Seite den Fadenfühler (9) und auf der anderen Seite einen Meßkopf (10, 11).

Der Fadenfühler ist in einem geschlossenen Gehäuse (20) untergebracht.

FIG. 3

EP 0 288 784 A2

## Fadenzugkraftmeßvorrichtung mit federnd bewegbarem Fadenfühler

Die Erfindung betrifft eine Fadenzugkraftmeßvorrichtung mit einem federnd bewegbaren Fadenfühler.

Die Fadenzugkraft stellt bei der Herstellung und der weiteren Bearbeitung, etwa bei der Textu-rierung und insbesondere der Fal-schdralltexturierung einen wesentlichen Verfahren-sparameter dar. Auch kurzzeitige Schwankungen der Fadenzugkraft können die Qualität des Fadens erheblich beeinflussen und beeinträchtigen. So ist beispielsweise bei der Aufwicklung der Fäden an einer Spinnstreckmaschine vor allem bei hohen Anforderungen an die Titergleichmäßigkeit die Einbeziehung des Fadenzugkraftverlaufs in die Regelung der Aufwickelgeschwindigkeit von erheblicher Bedeutung, weshalb ihre kontinuierliche Überwachung und Messung erforderlich wird. Bei hohen Fadengeschwindigkeiten treten hohe Frequenzen der Fadenzugkraftschwankungen auf. Der Faden-zugkraftmesser sollte diesen Fadenzugkraft-schwankungen möglichst weitgehend folgen kön-nen. Die Eigenfrequenz des Fadenzugkraftmesse-res sollte also genügend weit über den auftretenden Frequenzen der Fadenzugkraftschwankungen liegen.

Der Erfindung liegt danach die technische Aufgabe zugrunde, eine Fadenzugkraftmeßvorrichtung mit hoher Eigenfrequenz bereitzustellen, der weitgehend lageunabhängig ist und eine hohe Meßgenauigkeit bei genauer Reproduzierbarkeit des Meßergebnisses erreicht.

Diese Aufgabe wird erfindungsgemäß durch eine Fadenzugkraftmeßvorrichtung der eingangs genannten Art gelöst, die sich dadurch auszeichnet, daß das den Fadenfühler tragende Federelement eine Torsionsfeder ist und der Fadenfühler an einem Ende mit der Torsionsfeder in senkrechter Anordnung zu ihr starr verbunden ist. In Weiterbildung ist der als Fadenfühler dienende Stab auf beiden Seiten über die Torsionsfeder hinaus verlängert. Der Kopf der Verlängerung steht mit einem Signalgeber in Wirkverbindung. Bei einer Weiterbildungsform ist die Torsionsfeder beidseitig eingespannt, der Fadenfühler liegt in der senkrecht zur Torsionsfeder verlaufenden Mittelebene.

Bei einer bevorzugten Ausbildungsform der erfindungsgemäßen Vorrichtung ist die Torsionsfeder eine an ihren einander gegenüberliegenden Schmalseiten eingespannte ebene Platte. Sie ist zentrisch von einem Stab durchdrungen, dessen freie Enden auf der einen Seite der Platte als Fadenfühler einen mit dem Faden in Kontakt stehenden Tastkopf und auf der anderen Seite einen mit ein-em gegenüberliegenden ortsfesten Signalgeber zu-sammenwirkenden Meßgeber tragen. Der die Torsionsfeder durchdringende Stab ist vorteilhaft im wesentlichen in deren Masseschwerpunkt eingespannt, wobei vorzugsweise die Anordnung derart erfolgt, daß die Masseschwerpunkte der Torsionsfeder und des Stabes im wesentlichen zusammen-fallen. Dadurch wird die Fadenzugkraftmeßvorrich-tung von der Einbaulage unabhängig.

Um in beiden Torsionsrichtungen ein symmetrisches Meßverhalten zu erzielen, wird die plattenförmige Torsionsfeder zu ihrer Torsionsachse bzw. zur sog. neutralen Faser symmetrisch ausgebildet. Sie kann auf der Stirnseite eines geschlossenen Gehäuses eingespannt sein, so daß nur der Fadenfühler mit dem Tastkopf aus dem Gehäuse vorsteht, während die Meßeinrichtung geschützt im Gehäuseinneren liegt. Um einen proportionalen Zusammenhang zwischen Fadenzugkraft und Meßanschlag zu erhalten, hat die die Torsionsfeder darstellende ebene Platte die Form eines Doppel-T. Sie ist an den Enden (Lappen) des Querbalkens des Doppel-T aufgespannt. Dabei liegen vorzugsweise nur die Lappen des T selbst auf, während unter und-bei vorhandenem Gehäusedeckel - über der zwischen den Lappen liegenden Verlängerung des stabförmigen Teils der Torsionsfeder in den Gehäuse-und ggf. Deckelwänden die Verlängerungen freilegende Ausnehmungen vorgesehen sind. Um die im Gehäuseinneren liegende Meßeinrichtung vor eindringendem Staub zu - schützen, kann die Torsionsfeder an ihren Seitenrändern mit einer ihrerseits mit der Gehäusewand staubdicht verbundenen Membrane verbunden sein, deren Rückstellkraft vernachlässigbar klein ist. Bei der Gestaltung der plattenförmigen Torsionsfeder kann es ggf. von Vorteil sein, wenn die Breite der plattenförmigen Torsionsfeder im Bereich der Durchdringung durch den Stab so weit vergrößert wird, daß das Trägheitsmoment des stabförmigen Teils der plattenförmigen Torsionsfeder über seine gesamte freie Länge im wesentlichen gleich bleibt.

Zeichnungsbeschreibung:

An Hand der in der beigegebenen Zeichnung dargestellten Ausführungsbeispiele wird die Erfindung nher erlutert. Es zeigt:

Fig. 1 Seitenansicht einer erfindungsgemäßen Fadenzugkraftmeßvorrichtung;

Fig. 2 Draufsicht auf die Vorrichtung gem. Fig. 1;

Fig. 3 Längsschnitt durch ein Meßgehuse;

Fig. 4 Querschnitt des Gehäuses gem. Fig. 3

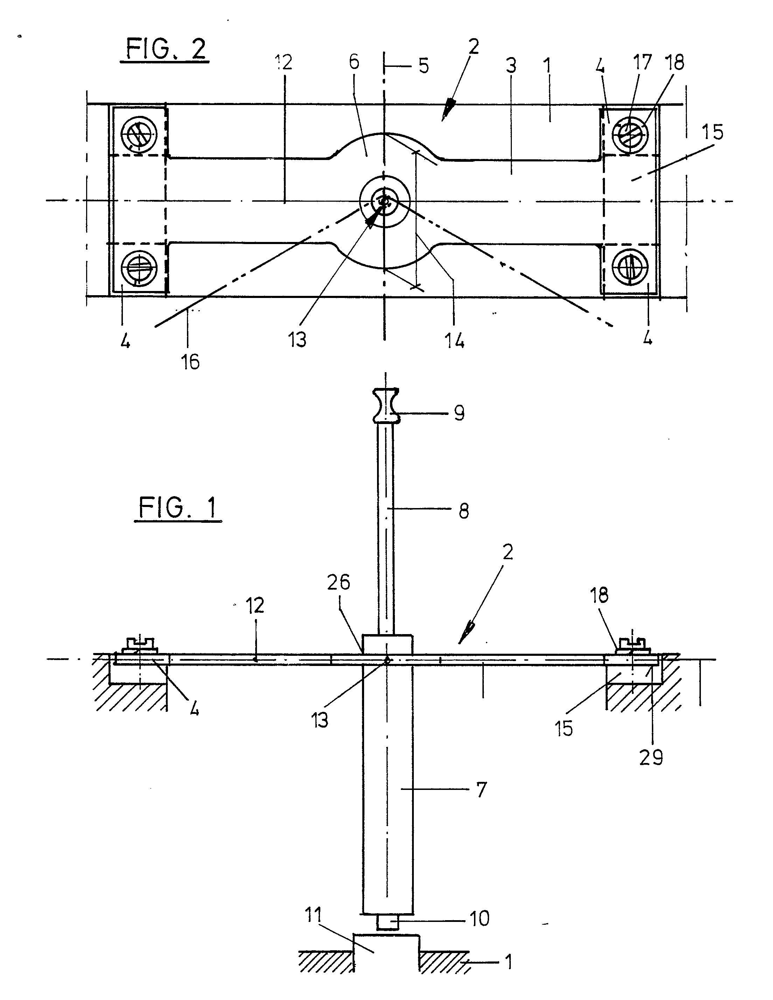

Die Figuren 1 und 2 zeigen eine erfindungsgemäße Fadenzugkraftmeßvorrichtung, die mit einer Torsionsfeder 2 in Form einer ebenen Platte ausgestattet ist. Sie besteht aus dem stabförmigen Mittelteil 3 und den vier der Torsionsfeder 2 die Form eines Doppel-T gebenden Lappen 4, die die Querbalken bilden. Die Torsionsfeder ist sowohl zur Torsionsachse 12 als auch zur in Fig. 2 als Linie dargestellten Mittelebene 5 symmetrisch gestaltet, so daß der Flächen-und der Masseschwerpunkt 13 zusammenfallen. Über die Lappen 4 Der Torsionsfeder 2 sind durch Schrauben 17 und Scheiben bzw. Federringe 18 auf einer Aufspannfiche 29 der Halterung 1 aufgespannt ist. Im Bereich der zwischen den Lappen 4 verlaufenden Verlängerung des stabförmigen Mittelteils 3 ist je eine Ausnehmung 15 vorgesehen, so daß die Querbalken nur ihren Enden (Lappen) aufliegen und der stabförmige Mittelteil 3 der Torsionsfeder 2 auf seiner gesamten Länge frei liegt.

Im wesentlichen im Masseschwerpunkt 13 der plattenförmigen Torsionsfeder 2 wird diese von einem Stab 7, 8 senkrecht zur Plattenoberfläche durchdrungen. Der untere Teil 7 (Fig. 1) trägt an seinem freien Ende einen Meßgeber 10, der mit dem Signalgeber 11 zusammenwirkt. Der obere Teil 8 des Stabes 7, 8 trägt an seinem freien Ende den Tastkopf 9, in der Darstellung einen Fadenführer in Diaboloform, über den der Faden 16 etwa so, wie in Fig. 2 angedeutet, geführt ist und über den Tastkopf 9 und den Tastarm 8 auf die Feder 2 ein in seiner Höhe von der im Faden 16 wirkenden Fadenzugkraft abhängiges Torsionsmoment um die Torsionsachse 12 ausübt. Im Bereich der Durchdringungsstelle 26 hat bei der dargestellten Ausführungsform das Mittelstück 6 des stabförmigen Teils eine größere Breite 14 als im übrigen Bereich. Dies kann zweckmäßig sein, um das polare Flächenträgheitsmoment des stabförmigen Teils 3 auf dessen gesamter freien Länge im wesentlichen gleich zu machen.

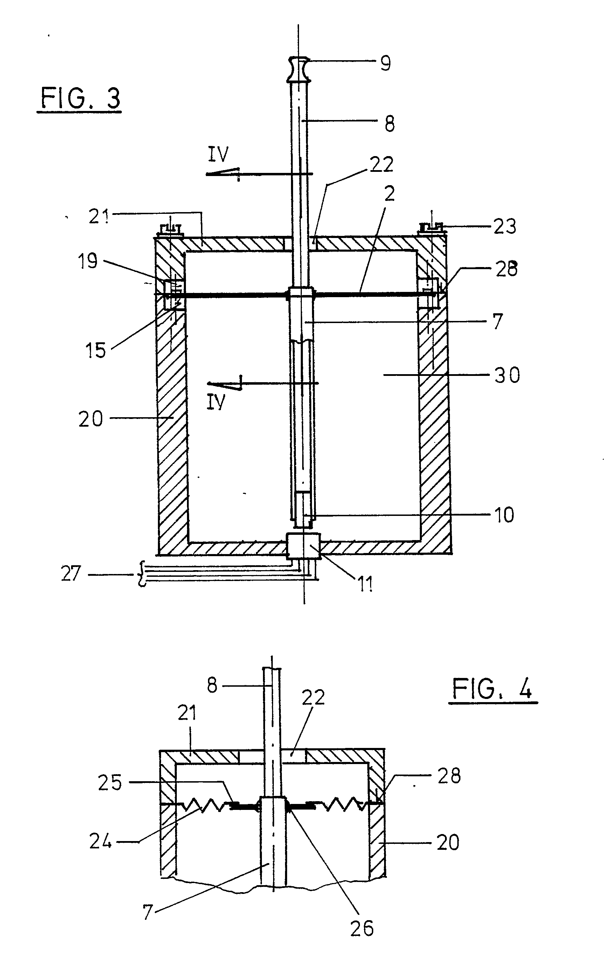

Eine Weiterbildungsform der erfindungsgemäßen Vorrichtung zeigen die Figuren 3 und 4. Eine mit der der Figuren 1 und 2 vergleichbare Fadenzugkraftmeßvorrichtung 2 bis 10 ist in ein geschlossenes Gehäuse 20 eingesetzt. Hierzu sind die T-Lappen 4 auf zwei einander gegenüberliegenden Gehäuseseiten mit der offenen Stirnfläche 28 des Gehäusemantels verschraubt. Wie bereits zur Fig. 1 beschrieben sind unter der Verlängerung des stabförmigen Federmittelteils 3 die zwischen den Lappen 4 des Querbalkens eines jeden Federendes verläuft Ausnehmungen 15 vorgesehen. Das Gehäuse 20 ist mit einem Deckel 2 abgedeckt, der einen den Durchtritt und die freie Beweglichkeit des Tastarms 8 gewährleistenden Schlitz 22 aufweist und vermittels der Schrauben 23 mit dem Gehäuse 20 verbunden ist. Im Bereich der Ausnehmungen 15 am Gehäuse 20 sind auch im Deckel 21 Ausnehmungen 19 vorgesehen, die aber vorzugsweise über die gesamte Federbreite einschließlich der Lappen 4 reicht.

Fig. 4 zeigt außerdem eine Membrane 24, die beispielsweise durch Verkleben mit den Rändern 25 der Torsionsfeder 2 verbunden ist. Am Gehäuse 20 ist die Membrane 24 zwischen der Stirnfläche 28 und dem Deckelrand eingeklemmt. Diese Membrane ausschließlich dem Staubschutz der Meßeinrichtung 10, 11 und kann daher sehr dünn sein und eine praktisch vernachlässigbar kleine Rückstellkraft haben, so daß eine Beeinflussung der Meßergebnisse ausgeschlossen werden kann.

Zum Umsetzen der durch die Änderungen der Fadenzugkraft verursachten Bewegungen der Stabenden in Meßsignale, ggf. auch Istwertsignale für eine Regelung der Aufwickelgeschwindigkeit, gibt es verschiedene in der Meßtechnik bekannte und gebräuchliche Möglichkeiten. So kann beispielsweise der am Ende des Stabarms 7 vorgesehene Meßgeber 10 ein Permanentmagnet sein. Der in der Halterung 1 ihm gegenüber eingesetzte Meßempäfnger oder Signalgeber 11 kann in diesem Fall beispielsweise entweder ein magnetoresistiver Sensor oder eine wegen ihrer seiner bekannten hohen Empfindlichkeit in manchen Fällen besonders geeignete Hall-Sonde sein, wobei die im einzelnen bei der Auswahl und beim Einbau zu beachtenden Besonderheiten der Fachwelt geläufig sind. Ebenso ist eine pneumatische Einrichtung mit Düse und Prallplatte, eine optische Lösung etwa mit Doppelphotodiode möglich. Die jeweils ausgewhlte Meßeinrichtung sollte in jedem Fall geeignet sein, den gesamten von der Torsionsfeder 2 und dem Meßstab 7, 8 überstrichenen Frequenzbereich der Fadenzugkraftschwankungen zu verarbeiten.

BEZUGSZEICHENAUFSTELLUNG
1 Halterung, Tragbugel
2 Torsionsfeder
3 Stabteil, stabförmiger Teil
4 T-Lappen, Lappen, Befestigungslappen
5 Mittelebene
6 Mittelstuck
7 Stabarm, Meßarm, Verlängerung
8 Stabarm, Tastarm
9 Fadenfuhrerkopf, Tastkopf
10 Meßgeber, Kopf
11 Meßempfänger, Signalgeber
12 Torsionsachse, neutrale Faser
13 Masseschwerpunkt
14 Federbreite, Breite 15 Ausnehmung
16 Faden
17 Befestigungsschraube

18 Unterlegscheibe, Federring
19 Ausnehmung
20 Gehäuse
21 Deckel
22 Schlitz
23 Gehäuseschraube
24 Dichtmembrane
25 Befestigungsrand
26 Einspannstelle
27 Signalleitungen
28 Stirnseite
29 Auflagefiche
30 Meßseite

**Ansprüche**

1. Fadenzugkraftmeßvorrichtung mit einem federnd bewegbaren Fadenfühler, dadurch gekennzeichnet, daß der Fadenfühler ein starrer Stab (7) mit Tastkopf (9) ist, der an einer Torsionsfeder (2) schwenkbar aufgehängt ist, wobei die Torsions-und Schwenkachse (12) im wesentlichen senkrecht zur Meßrichtung liegt.

2. Fadenzugkraftmeßvorrichtung nach Anspruch 1, dadurch gekennzeichnet, daß der Fadenfühler (8, 9) über die Torsionsfeder (2) hinaus verlängert ist und der Kopf (10) der Verlängerung (7) mit einem Signalgeber (11) in Wirkverbindung steht.

3. Fadenzugkraftmeßvorrichtung nach Anspruch 1 oder 2, dadurch gekennzeichnet, daß die Torsionsfeder (2) ein beidseitig eingespannter länglicher Metallkörper, z. B. Stab, Blech, ist, und daß der den Fadenfühler bildende Stab mittig zwischen den Einspannenden fest mit der Torsionsfeder (2) verbunden ist, und daß die Meßkraftrichtung die von der Torsionsachse (12) und dem Fadenfühler-Stab aufgespannte Ebene im wesentlichen senkrecht durchdringt.

4. Fadenzugkraftmeßvorrichtung nach einem der vorhergehenden Ansprüche, dadurch gekennzeichnet, daß die Torsionsfeder (2) eine an den zwei einander gegenüberliegenden Schmalseiten eingespannte, zentrisch von dem Stab (7, 8) durchdrungene ebene Platte (3, 4) ist und der Stab (7, 8) auf der einen Seite als Fadenfühler (8) den Tastkopf (9) und auf der anderen Seite die Meßeinrichtung (Meßgeber 10) trägt.

5. Fadenzugkraftmeßvorrichtung nach Anspruch 4, dadurch gekennzeichnet, daß der die plattenförmige Torsionsfeder (2) durchdringende Stab (7, 8) im wesentlichen im Masseschwerpunkt (13) eingespannt ist (Einspannstelle 26).

6. Fadenzugkraftmeßvorrichtung nach Anspruch 4 oder 5, dadurch gekennzeichnet, daß die plattenförmige Torsionsfeder (2) zu ihrer Torsionsachse (neutrale Faser 12) symmetrisch ist.

7. Fadenzugkraftmeßvorrichtung nach einem der Ansprüche 4 bis 6, dadurch gekennzeichnet, daß die plattenförmige Torsionsfeder (2) auf der offenen Stirnseite (28) eines Gehäuses (20, 21) eingespannt ist.

8. Fadenzugkraftmeßvorrichtung nach einem der Ansprüche 4 bis 7, dadurch gekennzeichnet, daß die plattenförmige Torsionsfeder (2) Doppel-T-Form hat und an den Enden (Lappen (4)) der Querbalkenlappen der Doppel-T-Form auf Flächen (29) aufgespannt sind.

9. Fadenzugkraftmeßvorrichtung nach Anspruch 8, dadurch gekennzeichnet, daß in der Stirnfläche (28) des Gehäuses (20) zwischen den Auflageflächen (29) der T-Lappen (4) derartige Ausnehmungen (15) vorgesehen sind, daß der mittlere stabförmige Teil (3) der Torsionsfeder (2) auf seiner gesamten Länge frei liegt.

10. Fadenzugkraftmeßvorrichtung nach einem der Ansprüche 7 bis 9, dadurch gekennzeichnet, daß die Meßseite (30) des Gehäuses (20, 21) durch eine mit der plattenförmigen Torsionsfeder (2) verbundene Membrane (24) vernachlässigbarer Rückstellkraft abgedichtet ist.

FIG. 2

FIG. 1

FIG. 3

FIG. 4